# EUROPEAN PATENT SPECIFICATION

(11) **EP 1 757 101 B1**
(45) Date of publication and mention of the grant of the patent: **28.01.2009**
(21) Application number: 05736996.9
(22) Date of filing: 21.04.2005
(51) Int. Cl.: H04N 7/24, H04N 7/173

(54) **DIGITAL BROADCAST PLAYBACK DEVICE AND METHOD, COMPUTER PROGRAM, AND STORAGE MEDIUM**
WIEDERGABEEINRICHTUNG UND -VERFAHREN FÜR DIGITALE AUSSTRAHLUNGEN, COMPUTERPROGRAMM UND SPEICHERMEDIUM
DISPOSITIF ET PROCEDE DE LECTURE DE DIFFUSION NUMERIQUE, PROGICIEL, ET SUPPORT DE STOCKAGE

(30) Priority: 21.04.2004 JP 2004124936
(43) Date of publication of application: 28.02.2007
(73) Proprietor: Panasonic Corporation, Kadoma-shi Osaka 571-8501 (JP)
(72) Inventor: YANO,Masako Matsushita Electric Industrial Co.,Ltd, Chuo-ku,Osaka-shi Osaka 540-6319 (JP); HIRAMOTO,Takeshi Matsushita Electric Industrial, Chuo-ku,Osaka-shi Osaka 540-6319 (JP); IMANISHI,Yoshinori Matsushita Electric Industrial, Chuo-ku,Osaka-shi Osaka 540-6319 (JP)
(74) Representative: Grünecker, Kinkeldey, Stockmair & Schwanhäusser Anwaltssozietät
(86) International application number: PCT/JP2005/008081
(87) International publication number: WO 2005/104558

(56) References cited:
- US-A1- 2002 124 259
- US-A1- 2002 133 827
- US-A1- 2002 174 438
- US-A1- 2003 163 832

## Description

### Technical Field

The present invention relates to techniques of playing back interactive broadcast programs, and especially relates to techniques of controlling activation of application programs (applications) for communicating data for interactive services with a server device.

### Background Art

In a digital television broadcast program, applications can be multiplexed with AV (audio/video) content composed of video and audio data. Examples of such applications transmitted by digital television broadcasting include an audience-participatory application and an information-provision application. The audience-participatory application displays a user interface for receiving an answer to a quiz or an order for a product, and transmits the received answer or order to a server device in a broadcast station. The information-provision application, meanwhile, receives a report on a sports match in progress or a news bulletin from the server device, and displays the received information. A digital broadcast playback device executes these applications in conjunction with the playback of the AV content, thereby realizing interactive services.

Such an interactive application fails to work properly, if the server device in the broadcast station does not provide a service for the application. In general, the server device which provides the service, for the application is likely to be in operation during the broadcast of the digital television broadcast program (hereafter simply referred to as "broadcast program"). Accordingly, if the broadcast program including the application is received and instantly played back by the digital broadcast playback device while the broadcast program is being broadcast (this playback mode is hereafter called "real-time playback"), the interactive service can be realized.

However, the server device is likely to be stopped by an operator from servicing the application after a certain period of time, once the broadcast of the broadcast program has ended. For example, in the case of a live broadcast program that reflects viewers' opinions collected during broadcast upon the contents of the broadcast program, it is not practical to continue collecting opinions once the broadcast has ended.

Therefore, if the broadcast program is received and recorded in a recording medium such as a hard disk drive and, after the broadcast ends, read from the recording medium to be played back (this playback mode is hereafter called "time-shift playback"), the provision of the service by the server device may be stopped by the time of playback. In this case, the interactive application cannot work properly.

This causes a failure to yield one of the advantages of digital broadcasting, i.e. execution of applications in conjunction with playback of AV content. Besides, a significant operational problem occurs, as a user interface for a dysfunctional interactive application is displayed together with a playback image of the AV content by the digital broadcast playback device.

US 2002/133827 A1 describes a system and method for interactive events relating to broadcast content, whether provided over the television, internet, or other means, provides messages that can be transmitted to different types of user devices, including personal computers, set top boxes, net top boxes, and wireless clients. The system can be used with personal recorders by recording interactive content for display with the broadcast when the recorder is used to play back the broadcast. Also disclosed is a technique for storing (i) an interactive content provided by a server and (ii) a broadcast event acquired by using a route different from the interactive content, and providing a user with the interactive content by associating the interactive content with the broadcast event when playing the broadcast event in the storage. However the use of time codes generated both by server and client are not used to determine the selected code version as in the present invention.

### Disclosure of Invention

The present invention aims to provide a digital broadcast playback device and method, a computer program, and a storage medium storing the computer program, with which activation of applications included in a broadcast program can be flexibly controlled in accordance with a playback mode of the broadcast program.

In accordance with the present invention, the foregoing aims are realised as defined in the independent claims. Preferred embodiments are defined in the dependent claims.

### Brief Description of Drawings

FIG. 1 shows an example of use of a recording/playback device to which embodiments of the present invention relate.
FIG. 2 shows an example of a program map table of a broadcast program in a first embodiment of the present invention.
FIG. 3 shows an internal construction of the recording/playback device in the first embodiment.
FIG. 4 shows an example of an application information list;
FIG. 5 is a flowchart of a playback operation;
FIG. 6 is a flowchart of an application control operation;
FIG. 7 is a flowchart of a filtering operation;
FIG. 8 is a flowchart of an application activation operation;
FIG. 9A shows a selected application information list when the broadcast program is played in real time;
FIG. 9B shows a selected application information list when the broadcast program is played in time shift;
FIG. 9C shows a selected application information list when the broadcast program is played in time shift after expiration times of App3 and App4 are reached;
FIG. 10 shows a screen display when the broadcast program is played in real time;
FIG. 11 a screen display when the broadcast program is played in time shift;
FIG. 12 shows a screen display when the broadcast program is played in time shift after the expiration times of App3 and App4 are reached;
FIG. 13 shows an example of a program map table of a broadcast program in a second embodiment of the present invention
FIG. 14 shows an internal construction of the recording/playback device in the second embodiment;
FIG. 15 shows an example of an index list in the second embodiment;
FIG. 16 shows a screen display when the broadcast program is played in real time in the second embodiment;
FIG. 17 shows a screen display when the broadcast program is played in time shift in the second embodiment;
FIG. 18 is a flowchart of an index display application execution operation;
FIG. 19 shows an example of a program map table of a broadcast program in a third embodiment of the present invention;
FIG. 20 shows an internal construction of the recording/playback device in the third embodiment;
FIG. 21 shows a procedure of acquiring display capacity information in the third embodiment;
FIG. 22 is a flowchart of a filtering operation in the third embodiment;
FIG. 23 shows a screen display when the broadcast program is played using a high specification display device, in the third embodiment; and
FIG. 24 shows a screen display when the broadcast program is played using a low specification display device, in the third embodiment.

### Best Mode for Carrying out the Invention

### (First Embodiment)

The following describes a recording/playback device 200 according to a first embodiment of the present invention.

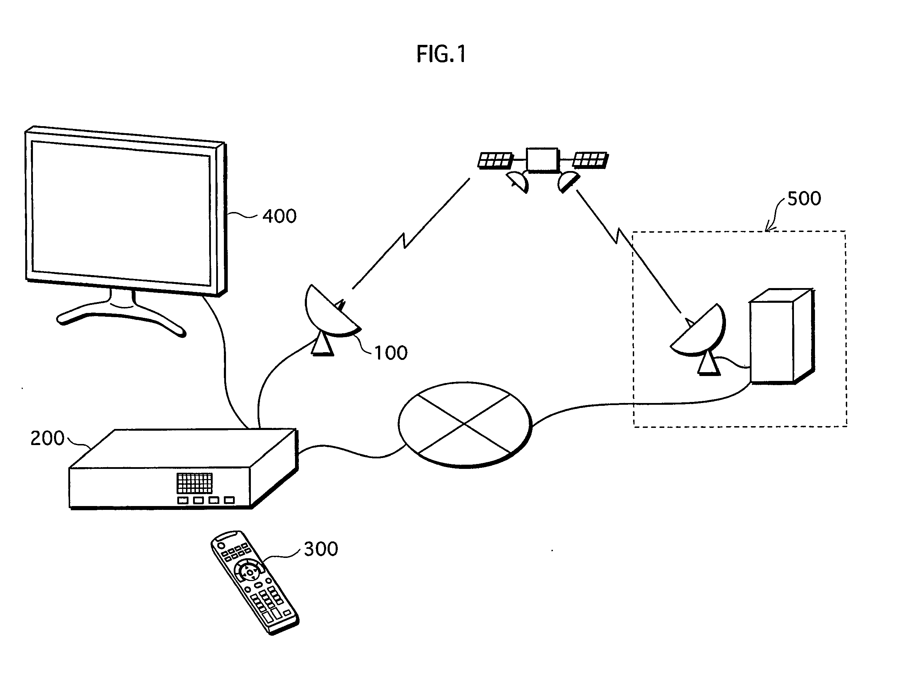

FIG. 1 shows an example of use of the recording/playback device 200. The recording/playback device 200 constitutes a digital broadcast viewing system together with an antenna 100, a remote control 300, and a television 400. A broadcast station 500 broadcasts a digital television broadcast program. The broadcast program broadcast by the broadcast station 500 includes AV content composed of video and audio data and one or more applications for interactive services. The broadcast station 500 is equipped with a broadcast device for transmitting a digital television broadcast wave, and a server device for providing the interactive services by communicating data relating to the broadcast program with the recording/playback device 200 via a network.

The recording/playback device 200 receives the broadcast program from the broadcast station 500 and records and/or plays the broadcast program, according to a user operation. Here, playback of a broadcast program means to play back the AV content included in the broadcast program and also execute an application included in the broadcast program. The application executed by the recording/playback device 200 functions to communicate data with the broadcast station 500 via the network, to thereby achieve an interactive service.

The broadcast program broadcast from the broadcast station 500 is explained in detail below. The broadcast program is transmitted in the form of a transport stream (hereafter "TS") in which stream data containing video and audio data is multiplexed with section data containing management information and one or more applications.

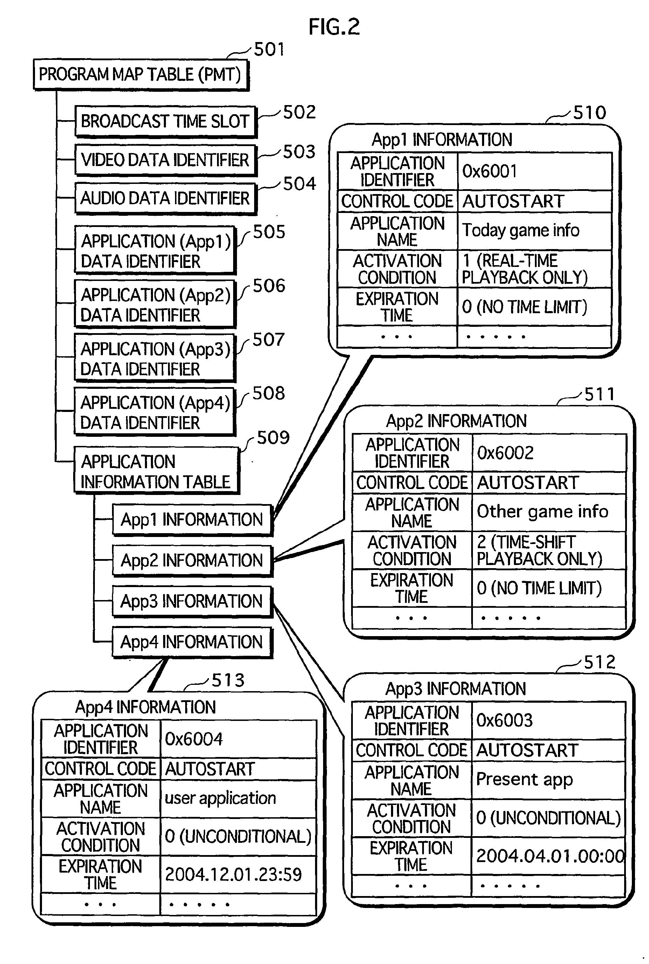

The management information includes a program map table (PMT) that shows a composition of the broadcast program. FIG. 2 shows an example of the PMT.

In the drawing, a PMT 501 indicates that a broadcast program which is constituted by video data, audio data, and four applications App1 to App4 is transmitted by a TS. The PMT 501 includes a broadcast time slot 502, a video data identifier 503, an audio data identifier 504, and application data identifiers 505 to 508. The broadcast time slot 502 shows a broadcast start time and a broadcast end time of the broadcast program. The video data identifier 503, the audio data identifier 504, and the application data identifiers 505 to 508 respectively show packet identifiers of packets carrying the video data, the audio data, and the four applications.

The PMT 501 further includes an application information table 509 which is referenced when the recording/playback device 200 according to the present invention executes an application included in the broadcast program. The application information table 509 is made up of four sets of application information corresponding to the four applications, namely, App1 information 510, App2 information 511, App3 information 512, and App4 information 513. Each set of application information contains an application identifier, control code, an application name, an activation condition, and an expiration time of the corresponding application. The application identifier uniquely identifies the application in the broadcast program. The control code is used to control the execution of the application. The control code "AUTOSTART" in each set of application information in the PMT 501 indicates the application to be activated at the time of playback of the broadcast program. The application name shows a name of the application.

The activation condition and the expiration time are information referenced to judge whether the application is to be executed, when playing the broadcast program in the recording/playback device 200. The activation condition shows whether the application is to be activated in real-time playback or time-shift playback of the broadcast program. The activation condition is set to "1" if the application is to be activated in real-time playback, and "2" if the application is to be activated in time-shift playback. If the application can be activated regardless of real-time playback or time-shift playback, the activation condition is set to an arbitrary value (e.g. "0"). The expiration time shows a time afterwhich the application is no longer executable. For instance, a date and time at which the server device in the broadcast station 500 stops providing an interactive service corresponding to the application is set as the expiration time. If there is no time limit for executing the application, the expiration time is set to an arbitrary value (e.g. "0").

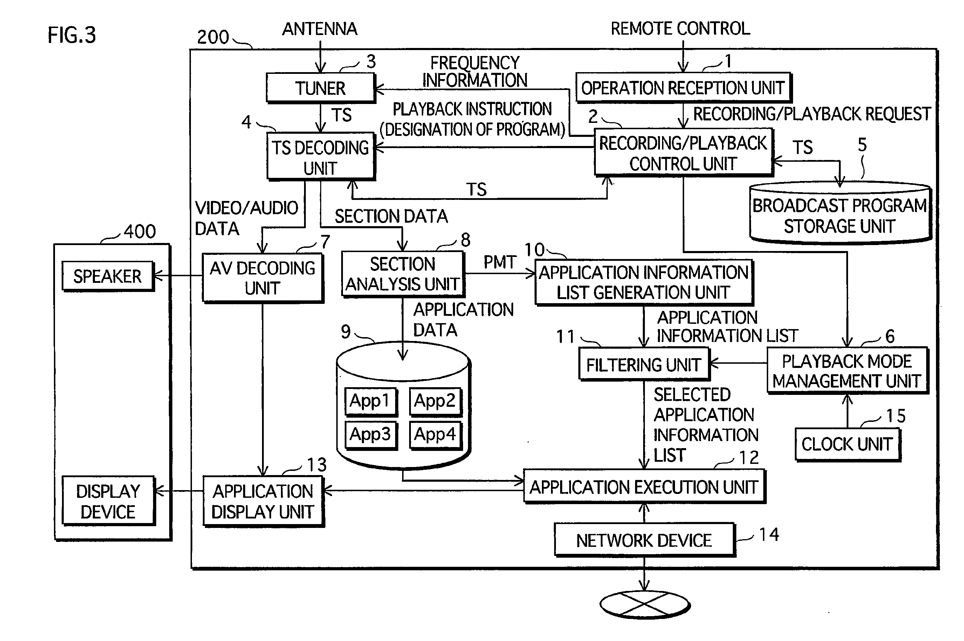

The following explains an internal construction of the recording/playback device 200. FIG. 3 shows the internal construction of the recording/playback device 200. As shown in the drawing, the recording/playback device 200 includes an operation reception unit 1, a recording/playback control unit 2, a tuner 3, a TS decoding unit 4, a broadcast program storage unit 5, a playback mode management unit 6, an AV decoding unit 7, a section analysis unit 8, an application storage unit 9, an application information list generation unit 10, a filtering unit 11, an application execution unit 12, an application display unit 13, a network device 14, and a clock unit 15.

The operation reception unit 1 receives a recording request and a playback request input by the user via an operation panel of the recording/playback device 200 or the remote control 300.

The recording/playback control unit 2 controls a recording operation and a playback operation of a broadcast program selected by the user, in accordance with a recording request and a playback request respectively.

The tuner 3 selects a frequency indicated by the recording/playback control unit 2 from a broadcast wave received by the antenna 100 and acquires a TS of a channel selected by the user, in a recording operation and a real-time playback operation.

The TS decoding unit 4 outputs the TS acquired by the tuner 3 to the recording/playback control unit 2 in a recording operation. The TS decoding unit 4 decodes the TS acquired by the tuner 3 or a TS read from the broadcast program storage unit 5 to obtain stream data and section data, in a playback operation.

The broadcast program storage unit 5 is a large-capacity storage device such as an internal hard disk drive, for storing a broadcast program in the form of a TS.

The playback mode management unit 6 manages a playback mode of a broadcast program requested to be played back, by holding playback mode information and playback time information. The playback mode information shows whether the broadcast program is currently broadcast (real-time playback) or is stored in the broadcast program storage unit 5 (time-shift playback), whilst the playback time information shows a date and time when the playback is requested. The playback mode information is set to "1" in real-time playback, and "2" in time-shift playback. The playback mode information is notified from the recording/playback control unit 2 according to the user' s playback request. The playback time information is set to a date and time shown by the clock unit 15 when the playback mode information is notified from the recording/playback control unit 2.

The AV decoding unit 7 is roughly made up of a video decoder for decoding video data and an audio decoder for decoding audio data, and decodes the stream data separated from the TS in the TS decoding unit 4 while synchronizing video and audio.

The section analysis unit 8 divides the section data separated from the TS in the TS decoding unit 4, into a section relating to management information and a section relating to application data. The section analysis unit 8 converts the section relating to the management information to a PMT, and analyzes it. The section analysis unit 8 also converts the section relating to the application data to applications.

The application storage unit 9 is used for storing the applications output from the section analysis unit 8.

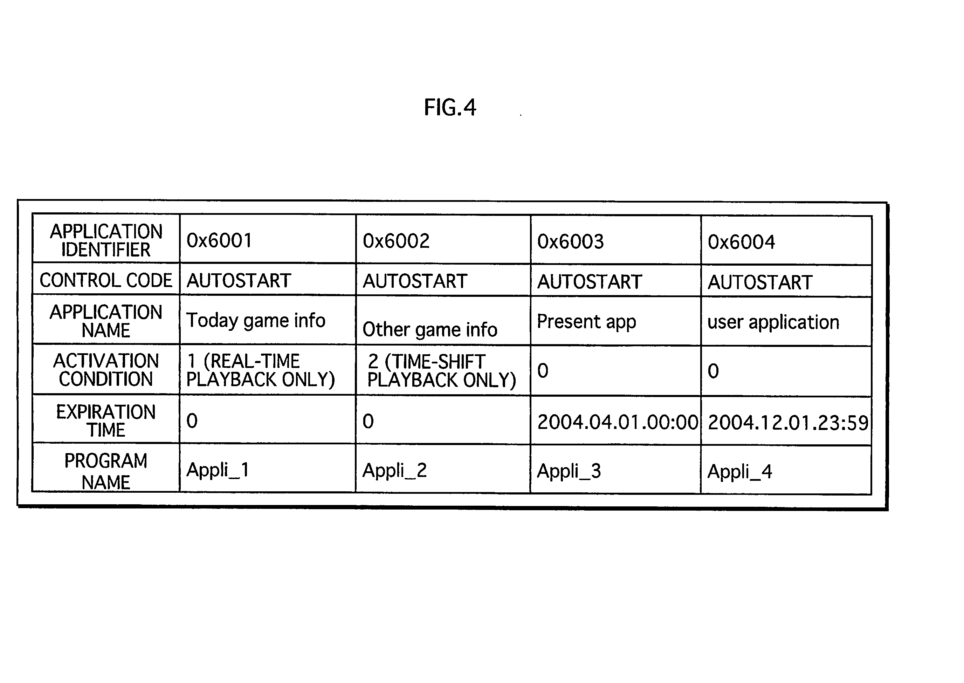

The application information list generation unit 10 analyzes an application information table defined in the PMT output from the section analysis unit 8 for each application, and generates an application information list. FIG. 4 shows an example of the application information list. As illustrated, the application information list shows application information, which is made up of an application identifier, control code, an application name, an activation condition, an expiration time, and a program name, for each application contained in the broadcast program.

The filtering unit 11 selects, from the application information list, each set of application information whose activation condition and expiration time are satisfied, based on the playback mode information and the playback time information held in the playback mode management unit 6. The filtering unit 11 generates a selected application information list which contains each selected set of application information.

The application execution unit 12 executes each application shown in the selected application information list.

The application display unit 13 generates an image (hereafter referred to as "playback image") in which the video output from the AV decoding unit 7 and an image generated by executing each application by the application execution unit 12 are laid out, and outputs the playback image to the television 400.

The network device 14 communicates with the server device in the broadcast station 500, according to an instruction from each application executed by the application execution unit 12.

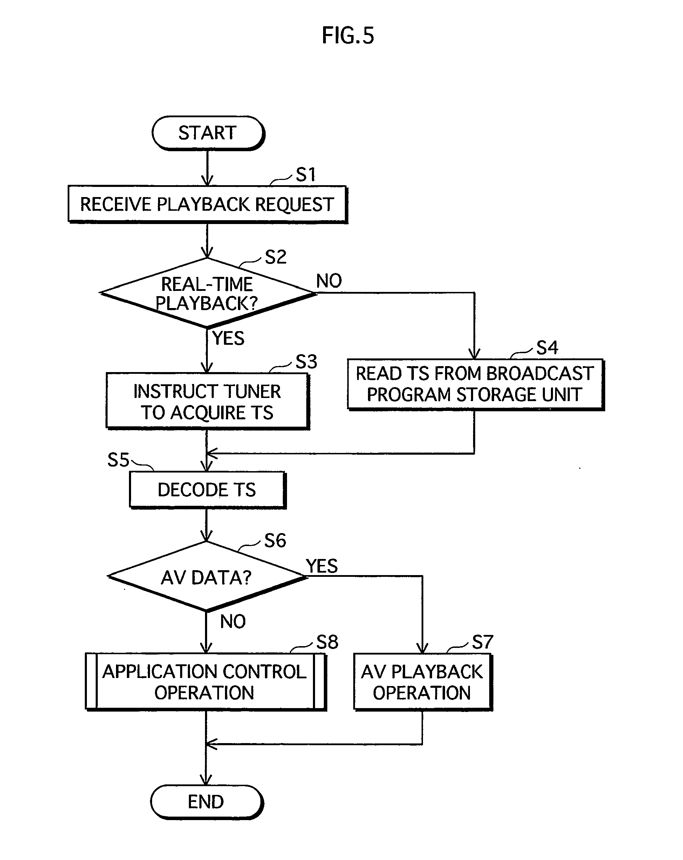

The following explains a playback operation performed by the recording/playback device 200 with the above construction. FIG. 5 is a flowchart of the playback operation.

First, the operation reception unit 1 receives a playback request and a designation of a broadcast program to be played back from the user, and outputs them to the recording/playback control unit 2 (S1). In real-time playback, the designation of the broadcast program is made using a channel number and a broadcast program name. In time-shift playback, the designation of the broadcast program is made using a broadcast program name stored in the broadcast program storage unit 5.

The recording/playback control unit 2 judges whether the designation of the broadcast program is made using a channel number (S2) . If the designation is made using a channel number (S2:YES), the recording/playback control unit 2 judges that the playback request is a real-time playback request, and instructs the tuner 3 to select the channel and acquire a TS *(S3).* If the designation is made using only a broadcast program name stored in the broadcast program storage unit 5 (S2:NO), the recording/playback control unit 2 judges that the playback request is a time-shift playback request, and reads a TS of the broadcast program identified by the broadcast program name from the broadcast program storage unit 5 (S4). The recording/playback control unit 2 then notifies the TS decoding unit 4 of the designated broadcast program.

The TS decoding unit 4 decodes the TS acquired in step S3 or S4, to separate video data, audio data, and section data of the designated broadcast program (S5). If the data separated from the TS is stream data (S6 : YES), the TS decoding unit 4 outputs the data to the AV decoding unit 7. If the data separated from the TS is section data (S6:NO), the TS decoding unit 4 outputs the data to the section analysis unit 8.

The AV decoding unit 7 performs an AV playback operation on the stream data (S7). In detail, the AV decoding unit 7 decodes the video data and the audio data in synchronization with each other, and outputs an audio signal to a speaker of the television 400 and a video signal to the application display unit 13.

Meanwhile, an application control operation is performed on the section data (S8) . In detail, applications included in the section data are selectively executed depending on a playback mode. This completes the playback operation.

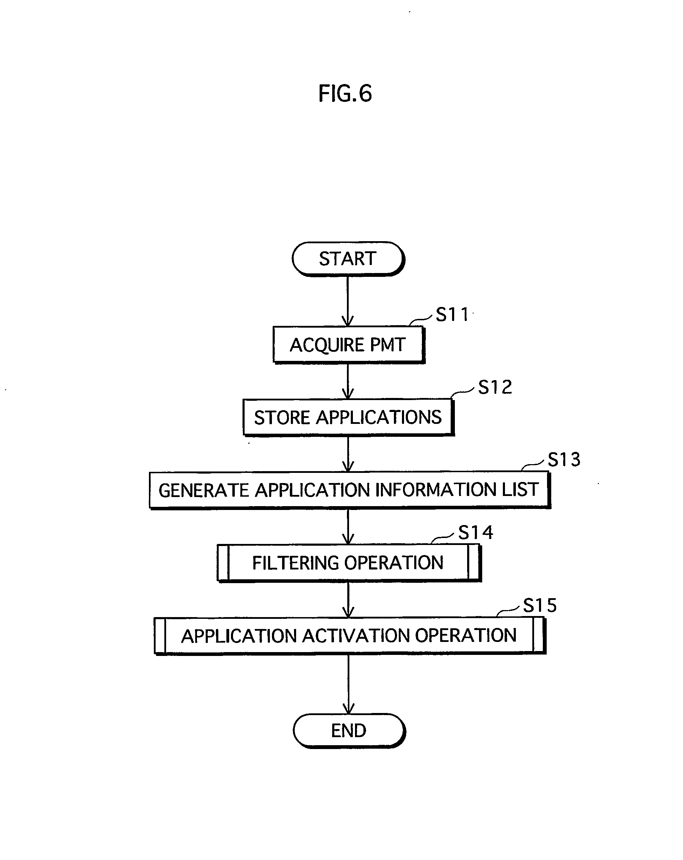

The following explains the application control operation in more detail. FIG. 6 is a flowchart of the application control operation.

First, the section data is analyzed to obtain applications and an application information list (S11 to S13) .

Which is to say, the section analysis unit 8 acquires a section which defines information about the broadcast program from the section data, and converts the section to a PMT (S11). The section analysis unit 8 also acquires a section which relates to application data from the section data, converts the section to applications, and stores them in the application storage.unit 9 (S12). The application information list generation unit 10 analyzes an application information table in the PMT obtained in step S11, and generates an application information list (S13).

The application information list generation unit 10 outputs the generated application information list to the filtering unit 11. The filtering unit 11 performs a filtering operation of selecting each set of application information whose activation condition and expiration time are satisfied from the application information list, and generating a selected application information list made up of the selected sets of application information (S14). The filtering unit 11 outputs the selected application information list to the application execution unit 12. The application execution unit 12 performs an application activation operation of launching each application shown in the selected application information list (S15). This completes the application control operation.

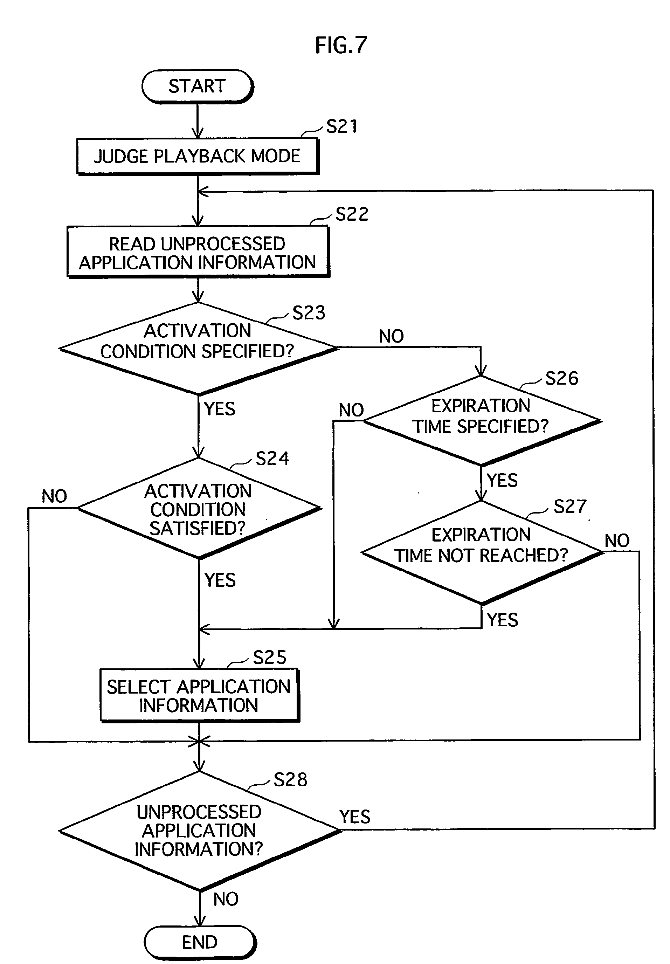

The following explains the filtering operation performed by the filtering unit 11, in more detail. FIG. 7 is a flowchart of the filtering operation.

First, the filtering unit 11 obtains the playback mode information and the playback time information from the playback mode management unit 6 (S21). The filtering unit 11 then performs a loop of steps S22 to S28, on each set of application information in the application information list.

The filtering unit 11 reads unprocessed application information from the application information list (S22), and judges whether an activation condition is specified in the read application information (S23).

If the activation condition shows "1" indicating that the application is to be executed in real-time playback or "2" indicating that the application is to be executed in time-shift playback (S23:YES), the filtering unit 11 checks whether the value of the activation condition matches a value shown by the playback mode information obtained in step S21 (S24). If they match (S24:YES), the filtering unit 11 registers the application information in the selected application information list (S25).

If the activation condition shows "0" indicating that no activation condition is specified (S23 :NO), the filtering unit 11 checks an expiration time of the application (S26 to S27).

Which is to say, the filtering unit 11 judges whether an expiration time is specified in the application information (S26). If no expiration time is specified (826:NO), the filtering unit 11 registers the application information in the selected application information list (S25). If an expiration time is specified (S26:YES), the filtering unit 11 judges whether the expiration time is not exceeded by a date and time shown by the playback time information obtained in step S21 (S27). If the expiration time is not exceeded (S27:YES), the filtering unit 11 registers the application information in the selected application information list (S25). The filtering unit 11 then judges whether any unprocessed application information exists in the application information list (S28). If so, the filtering unit 11 returns to step S22. This completes the filtering operation.

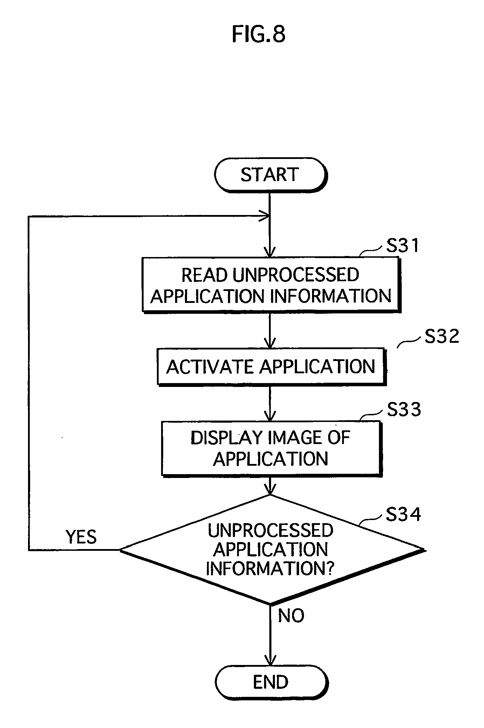

The following explains the application activation operation performed by the application execution unit 12 in more detail. FIG. 8 is a flowchart of the application activation operation.

The application execution unit 12 performs a loop of steps S31 to S34 on each set of application information in the selected application information list, to launch an application and generate an image for display.

First, the application execution unit 12 reads unprocessed application information from the selected application information list (S31).

The application execution unit 12 reads an application specified by the read application information from the application storage unit 9, and starts the read application (S32).

The application execution unit 12 instructs the application display unit 13 to add an image generated by the application started in step S32, to a playback image to be output to the television 400 (S33).

The application execution unit 12 then judges whether any unprocessed application information exists in the selected application information list (S34). If so, the application execution unit 12 returns to step S31. This completes the application activation operation.

The following explains playback images output from the recording/playback device 200, when a broadcast program is played back in various situations.

As one example, the broadcast program played here is a live broadcast of a soccer.match at March 21, 2004, 19:00, and is made up of video data, audio data, and four applications App1 to App4.

App1 to App4 each realize a different interactive service. In detail, App1 has a function of obtaining information about soccer matches still in progress at other stadiums during the broadcast of the broadcast program from the server device in the broadcast station 500, and displaying the obtained information. The server device provides the service of transmitting data for App1, from the broadcast start time to the broadcast end time of the broadcast program. App2 has a function of obtaining results of other soccer matches conducted after the broadcast of the broadcast program from the server device, and displaying the obtained results. The server device updates match result data every day, and provides newest match result data for App2 at the time of playback of the broadcast program. The server device provides the service of transmitting data for App2, after the broadcast end time of the broadcast program. App3 has a function of displaying an image for entering an answer to a quiz given in the broadcast program, and transmitting the answer to the server device. The server device provides the service of receiving answer data for App3, from the broadcast start time of the broadcast program to April 1, 2004, 00:00. App4 has a function of displaying an image for entering comments on the broadcast program, and transmitting the comments to the server device. The server device provides the service of receiving comment data for App4, from the broadcast start time of the broadcast program to December 1, 2004, 23:59.

A PMT of this broadcast program is the PMT 501 shown in FIG. 2. In the PMT 501, the activation condition and the expiration time in each set of application information are set in accordance with a period during which the server device services the corresponding application. At the time of playback of the broadcast program, the application information list shown in FIG. 4 is generated based on the PMT 501, by the application information list generation unit 10.

First, suppose the broadcast program is played in real time at March 21, 2004, 19:00, at which the broadcast of the broadcast program begins.

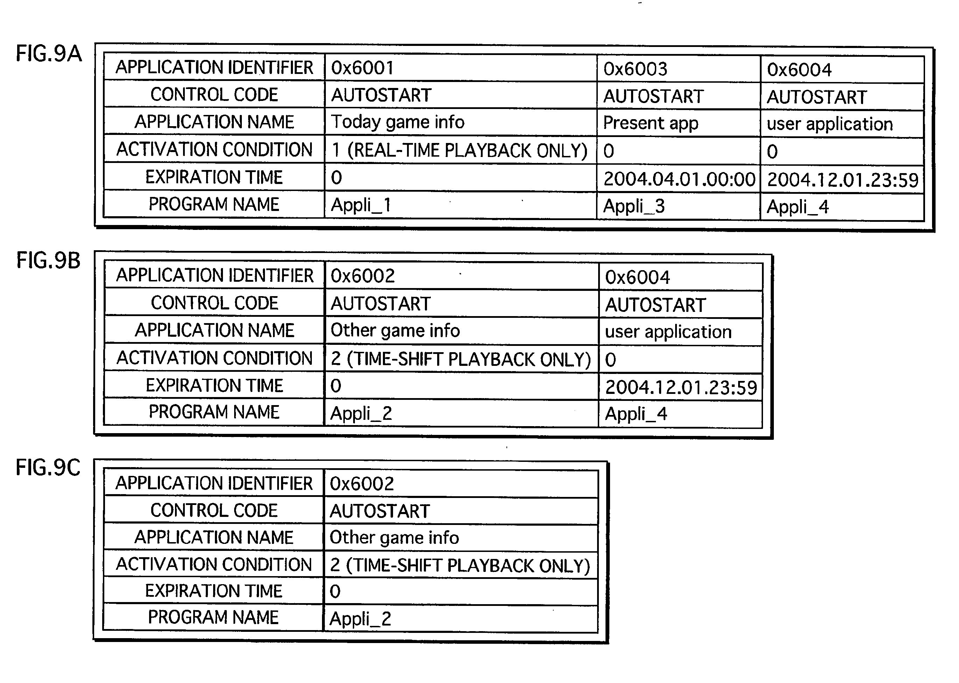

In this case, the playback mode information in the playback mode management unit 6 shows "1" which indicates real-time playback, and the playback time information in the playback mode management unit 6 shows March 21, 2004, 19:00 which is the broadcast start time of the broadcast program. This being so, the filtering unit 11 generates a selected application information list shown in FIG. 9A. This selected application information list contains application information of App1 whose activation condition is "1", and application information of App3 and App4 whose expiration times are later than March 21, 2004. 19:00. Based on this selected application information list, the application execution unit 12 starts App1, App3, and App4.

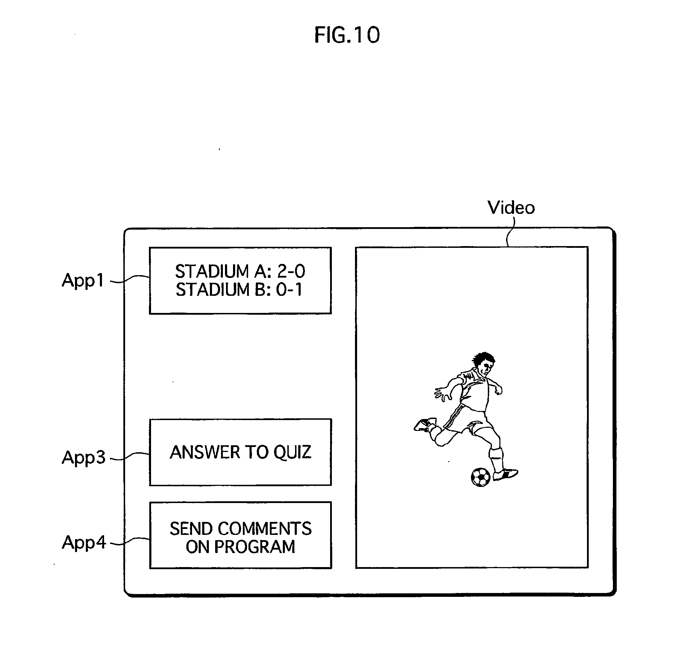

As a result, a playback image shown in FIG. 10, in which images generated by App1, App3, and App4 are laid out together with the video output from the AV decoding unit 7, is output from the application display unit 13.

Next, suppose the broadcast program is initially recorded in the broadcast program storage unit 5 and then played back in time shift at May 1, 2004, 12:00.

In this case, the playback mode information in the playback mode management unit 6 shows "2" which indicates time-shift playback, and the playback time information in the playback mode management unit 6 shows May 1, 2004, 12:00 at which the playback is requested. This being so, the filtering unit 11 generates a selected application information list shown in FIG. 9B. This selected application information list contains application information of App2 whose activation condition is "2", and application information of App4 whose expiration time is later than May 1, 2004, 12:00. Based on this selected application information list, the application execution unit 12 starts App2 and App4.

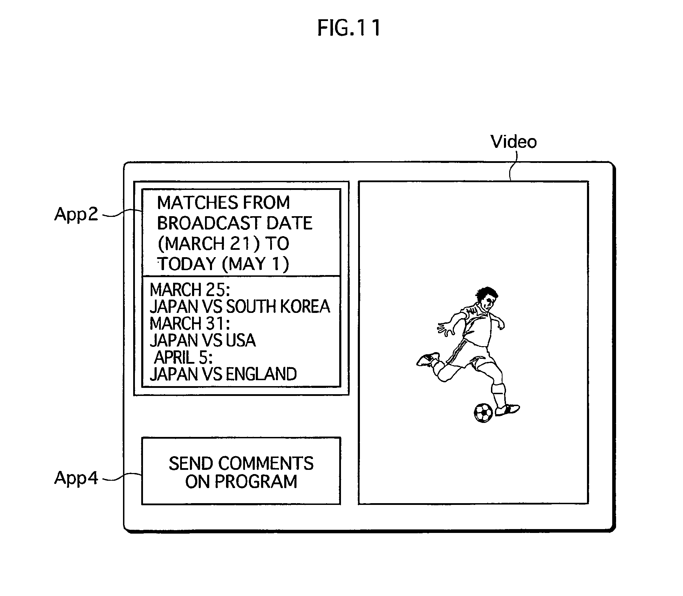

As a result, a playback image shown in FIG. 11, in which images generated by App2 and App4 are laid out together with the video output from the AV decoding unit 7, is output from the application display unit 13.

The real-time playback image shown in FIG. 10 and the time-shift playback image shown in FIG. 11 differ in the following. In FIG. 10, the progress of other soccer matches at other stadiums is displayed according to App1. In FIG. 11, meanwhile, the results of other soccer matches conducted after the broadcast of the broadcast program are displayed according to App2 . In this way, the recording/playback device 200 delivers an appropriate interactive service depending on whether playback is performed in real time or in time shift.

Further, suppose the broadcast program is initially recorded in the broadcast program storage unit 5 and then played back in time shift at January 1, 2005, 12:00.

In this case, the playback mode information in the playback mode management unit 6 shows "2" which indicates time-shift playback, and the playback time information in the playback mode management unit 6 shows January 1, 2005, 12:00. This being so, the filtering unit 11 generates a selected application information list shown in FIG. 9C. This selected application information list contains application information of App2 whose activation condition is "2". The application information of App3 and App4 are not contained in this selected application information list, because the expiration times of App3 and App4 precede January 1, 2005, 12:00. Based on this selected application information list, the application execution unit 12 starts only App2.

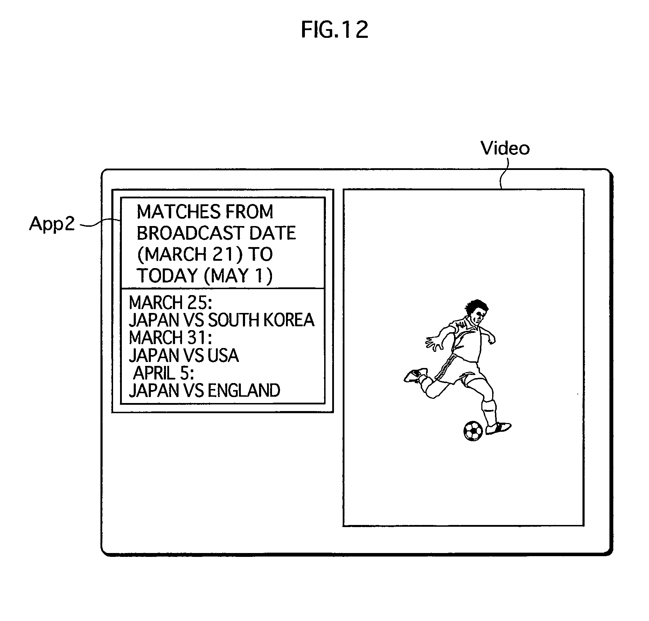

As a result, a playback image shown in FIG. 12, in which the image generated by App2 is laid out together with the video output from the AV decoding unit 7, is output from the application display unit 13.

In this way, the recording/playback device 200 provides an appropriate interactive service depending on when playback is performed, by executing only an application which is serviced by the server device at the time of playback.

According to this embodiment, by setting a playback mode (real time or time shift) or an expiration time for each interactive application in a broadcast program, it is possible to avoid activating an interactive application that is not serviced by the server device at the time of playback of the broadcast program. This eliminates unwanted traffic caused by execution of a dysfunctional interactive application that is no longer serviced by the server device. Furthermore, an operational problem caused by a user interface of the dysfunctional interactive application being displayed on a playback image of the broadcast program can be prevented.

Here, an application having an expiration time will not be launched even in real-time playback, if the expiration time is already exceeded by the time of broadcast. Accordingly, when a rerun having the same composition as the original broadcast program is played back in real time, an application whose expiration time is exceeded at the time of rebroadcast will not be launched. This makes it unnecessary for the broadcast station to recompose the rerun by excluding any application which is no longer serviced by the server device at the time of rebroadcast.

In the above example, when a broadcast program obtained from a broadcast wave is initially recorded in a recording medium and later played back, an application for real-time playback is not activated. Even if the broadcast program is initially recorded in the recording medium, however, a server device that services the application for real-time playback may still be in operation at the time when the broadcast program is read from the recording medium and played back.

For instance, in the case of chasing playback which allows a recorded portion of a broadcast program to be viewed from the beginning while continuing to record that broadcast program, a server device that services an application for real-time playback is likely to be in operation until the broadcast of the broadcast program ends.

In such a case, the filtering unit 11 may register application information of an application whose activation condition is real-time playback in the selected application information list until the broadcast of the broadcast program ends, based on the broadcast time slot shown in the PMT.

### (Second Embodiment)

A broadcast program used in the first embodiment is composed so as to realize an interactive service for both real-time playback and time-shift playback. This is predicated on an assumption that the server device provides an appropriate interactive service both during and after the broadcast of the broadcast program.

In actually, however, the broadcast station which broadcasts a number of new broadcast programs every day may not be able to provide different services during and after the broadcast of each one of these broadcast programs.

In view of this, a second embodiment of the present invention describes provision of non-interactive services by taking advantage of the property of time-shift playback.

In the case of a broadcast program that is played back in real time, AV content in the broadcast program is sequentially acquired from a broadcast wave as the broadcast of the broadcast program progresses. In the case of a broadcast program that is played back in time shift, on the other hand, AV content in the broadcast program is stored in the broadcast program storage unit 5 and therefore can be read at an arbitrary position. Based on this property of time-shift playback, an application for playing back AV content at an arbitrary position is included in a broadcast program as an application for time-shift playback in this embodiment.

The broadcast program used in this embodiment is explained first. As one example, the broadcast program is a news program which contains video data, audio data, and two applications, i.e. App11 for real-time playback and App12 for time-shift playback.

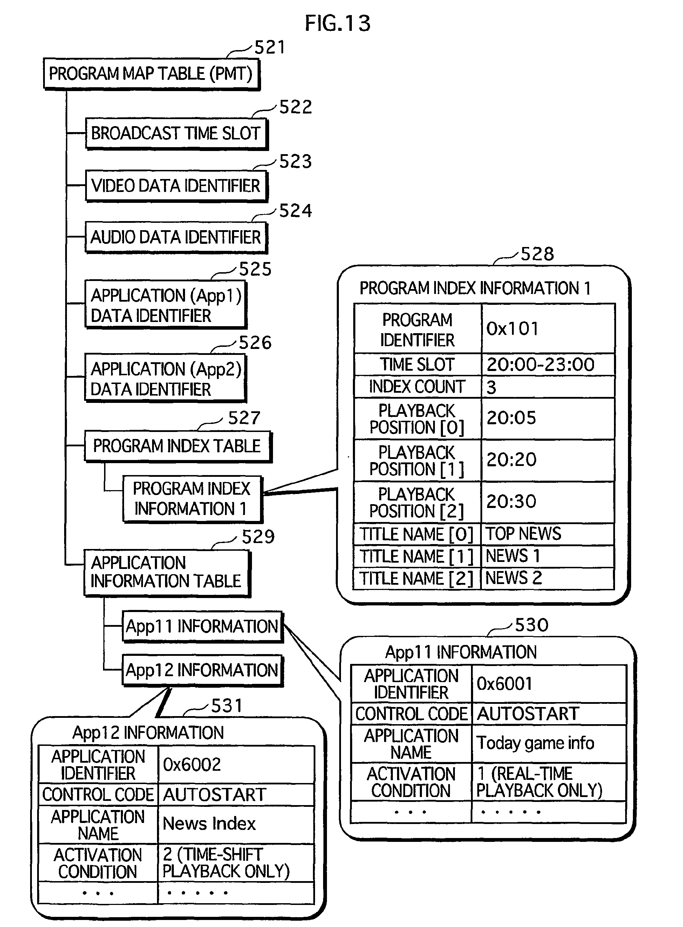

FIG. 13 shows an example of a PMT of this broadcast program. A PMT 521 shown in FIG. 13 differs from the PMT 501 shown in FIG. 2 in that a program index table 527 is added.

A broadcast time slot 522, a video data identifier 523, an audio data identifier 524, application data identifiers 525 to 526, and an application information table 529 including App11 information 530 and App12 information 531 in the PMT 521 have the same structures as those in the PMT 501.

The program index table 527 includes program index information 1 528, which is used by App12 for time-shift playback. The program index information 1 528 includes a program identifier, a time slot, an index count, and a pair of playback position and title name for each index.

The program identifier uniquely identifies the broadcast program in a TS . The time slot shows a broadcast start time and a broadcast end time of the broadcast program. The index count shows a number of indices for the broadcast program which are to be displayed by App12. The playback position shows a position in the broadcast program corresponding to an index, using an actual time when the broadcast program is broadcast. The title name is a character string used for displaying the index by App12 . The same number of playback positions and title names as the number shown by the index count are set in the program index information 1 528.

Although a playback position is expressed using an actual time when the broadcast program is broadcast in this example, the playback position may instead be expressed using a relative time from the beginning of the broadcast program.

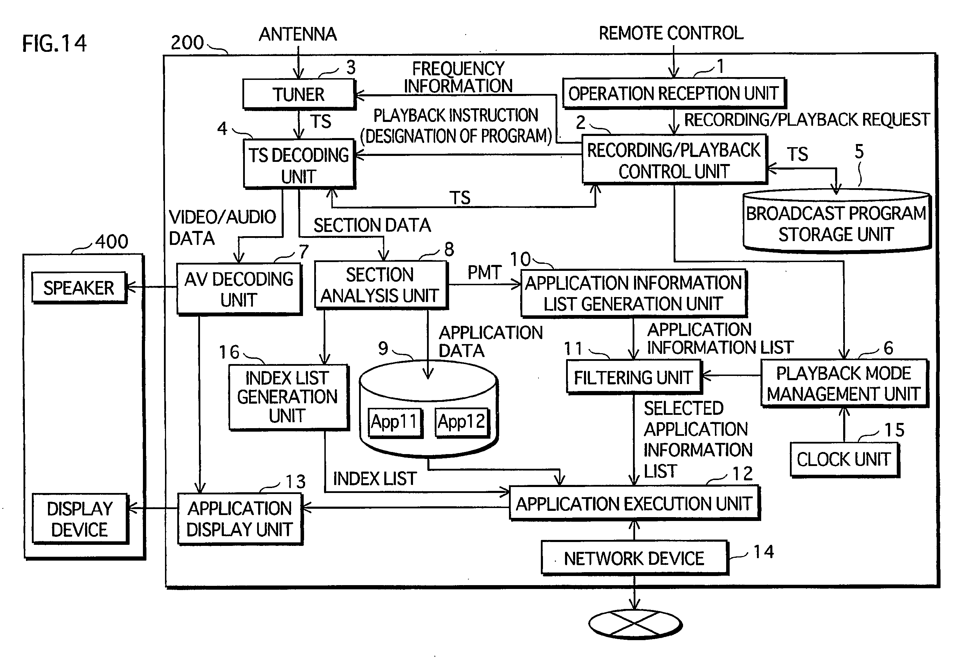

FIG. 14 shows an internal construction of the recording/playback device 200 in this embodiment. The difference from the one shown in FIG. 3 lies in that an index list generation unit 16 is added.

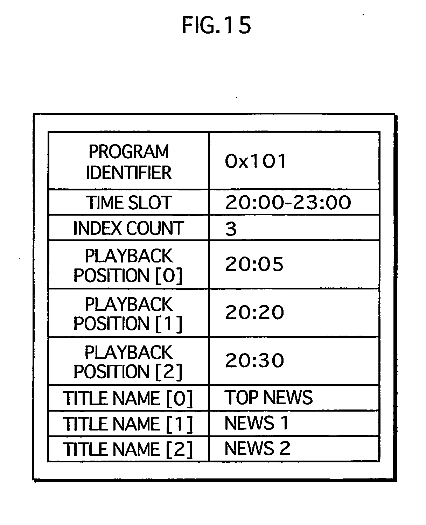

The index list generation unit 16 generates an index list such as the one shown in FIG. 15 from a program index table defined in a PMT, and stores it in a temporary storage area.

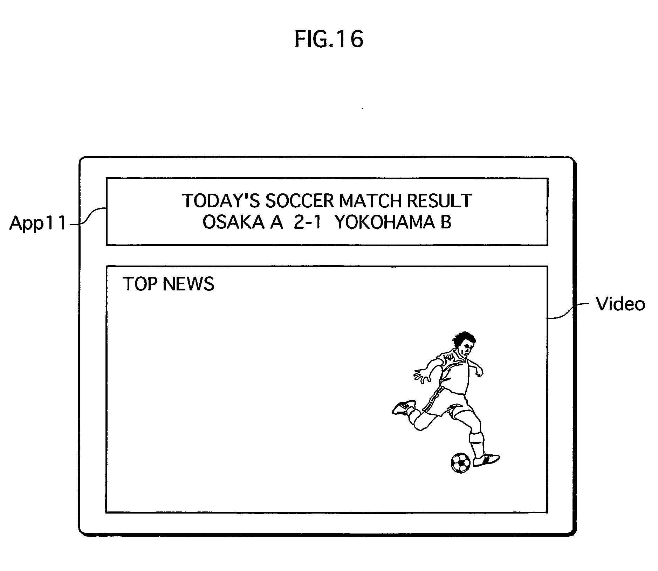

When the recording/playback device 200 with the above construction plays back the broadcast program having the composition shown by the PMT 521 in real time, App11 for real-time playback is launched and as a result a playback image shown in FIG. 16 is displayed on the television 400.

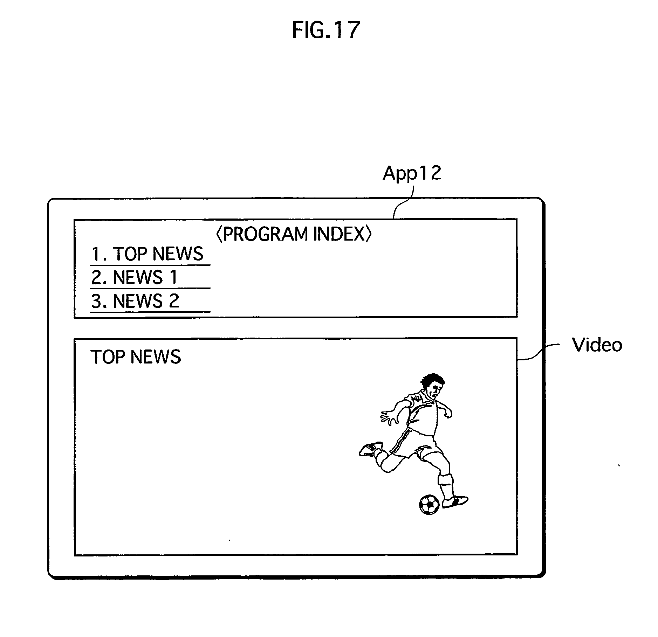

When the recording/playback device 200 plays back the broadcast program in time shift, on the other hand, App12 for time-shift playback is launched and as a result a playback image shown in FIG. 17 is displayed on the television 400. A user interface of App12 displayed here shows a list of indices for different content portions of the broadcast program and receives a selection of an index from the user.

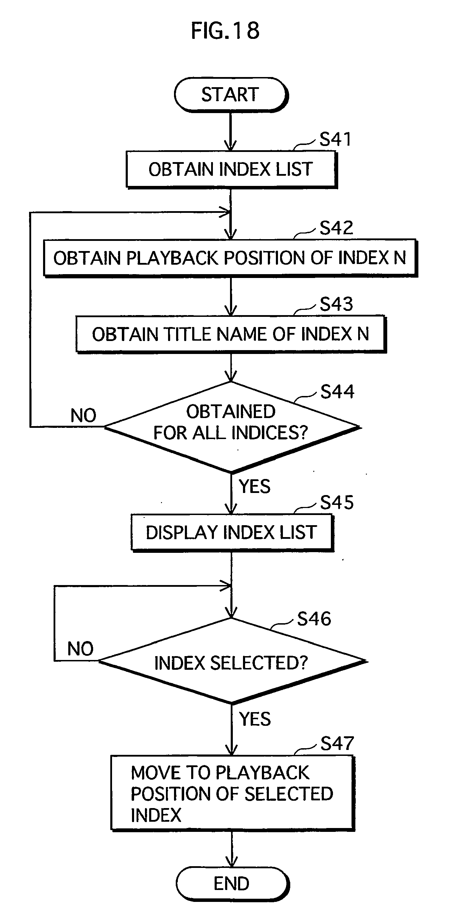

The following explains an index display application execution operation performed by the application execution unit 12 through the execution of App12 for time-shift playback, in detail. FIG. 18 is a flowchart of the index display application execution operation.

First, the application execution unit 12 displays a list of indices for content portions of the broadcast program (S41 to S45).

Which is to say, the application execution unit 12 reads the index list generated by the index list generation unit 16, from the temporary storage area (S41). The application execution unit 12 then performs a loop of steps S42 to S44 to obtain a playback position and a title name for each index in the index list. The application execution unit 12 instructs the application display unit 13 to display a user interface showing a list of indices by title names (S45).

After this, the application execution unit 12 waits for a selection of an index from the user via the remote control 300 (S46). If any of the indices is selected (S46:YES), the application execution unit 12 notifies the recording/playback control unit 2 of a playback position corresponding to the selected index, to read and play back the AV content in the broadcast program stored in the broadcast program storage unit 5 at the playback position (S47).

Thus, when a broadcast program is played in time shift, an application for time-shift playback displays a user interface of presenting a list of indices for the contents of the broadcast program and receiving a selection of an index from the user. Once an index has been selected, the AV content in the broadcast program is played back at a playback position corresponding to the selected index.

According to this embodiment, an additional service of enabling the user to selectively view desired content can be achieved based on the property of time-shift playback, that is, a broadcast program is stored in a recording medium and so AV content is readable at an arbitrary position. Such an additional service can be delivered with there being no need to operate the server device after the broadcast of the broadcast program.

### (Third Embodiment)

In the first embodiment of the present invention, an application to be executed is selected depending on whether a broadcast program is played in real time or in time shift. In a third embodiment of the present invention, an application to be executed is selected depending on a screen specification of a display device used for displaying a playback image.

In the first embodiment, a PMT specifies an activation condition of an application, based on whether the application is executable in real-time playback or in time-shift playback.

In the third embodiment, on the other hand, a PMT specifies an activation condition of an application, based on a display capacity of a display device used for displacing a playback image of a broadcast program. This being so, the recording/playback device 200 in the third embodiment executes an application which provides user interface functions, such as a character size, a color scheme, and a layout, that are suitable for the specification of the display device to increase user friendliness.

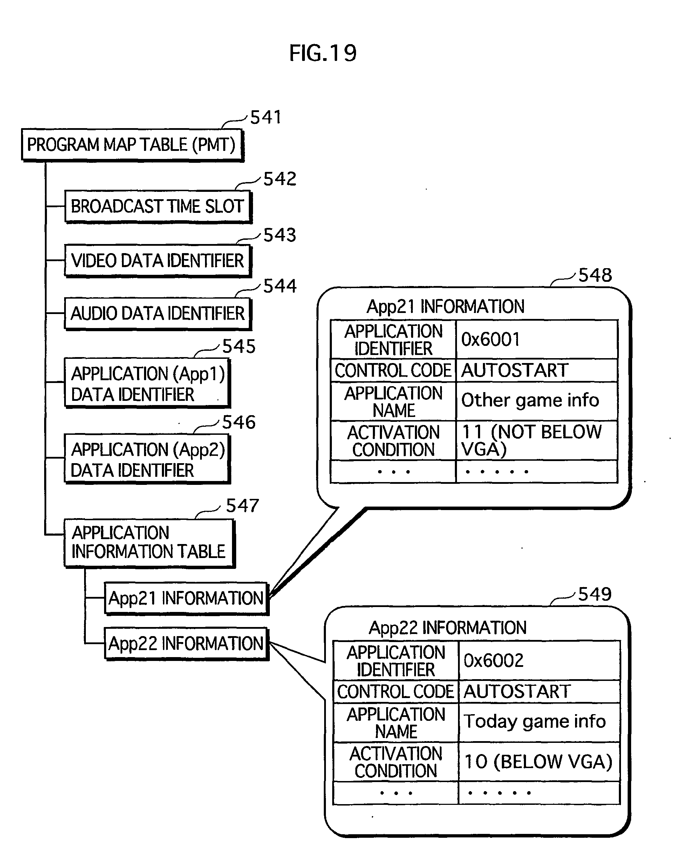

FIG. 19 shows an example of a PMT of a broadcast program in this embodiment. In a PMT 541 shown in the drawing, an activation condition of App21 in App21 information 548 is set to "11" which indicates the application to be activated when a screen resolution is equal to or greater than VGA, whereas an activation condition of App22 in App22 information 549 is set to "10" which indicates the application to be activated when the screen resolution is below VGA.

Though a screen resolution is used as the display capacity in this example, other attributes such as a screen size and an aspect ratio may instead be used. An activation condition of an application to be activated irrespective of the display capacity may be set to an arbitrary value (e.g. "0").

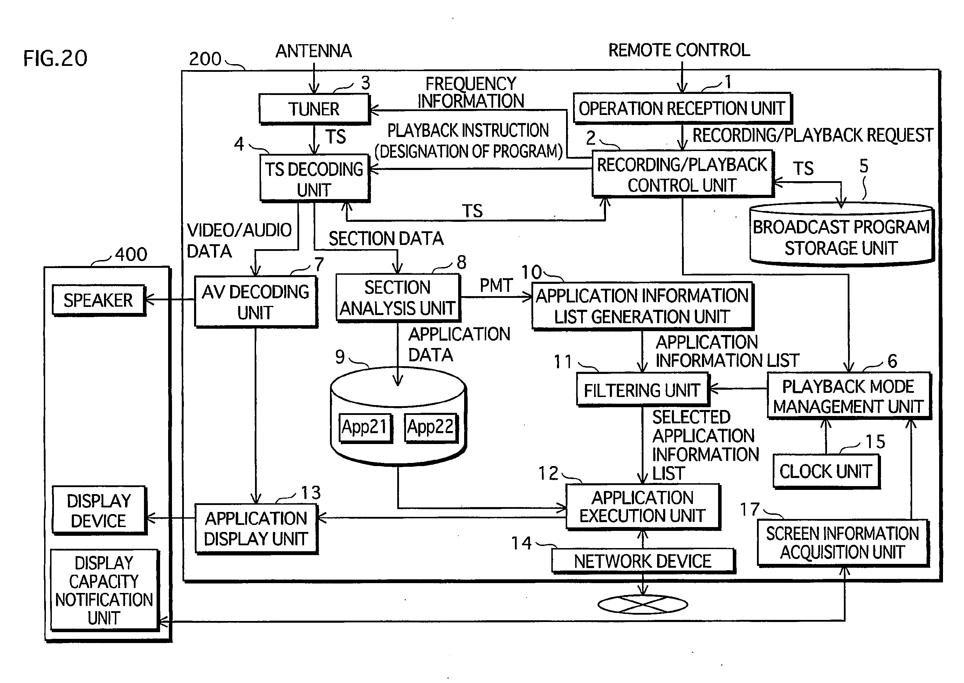

FIG. 20 shows an internal construction of the recording/playback device 200 in this embodiment. The difference from the one shown in FIG. 3 lies in that a screen information acquisition unit 17 is added.

The screen information acquisition unit 17 acquires display capacity information showing an attribute of the television 400 such as a screen resolution, an aspect ratio, or a screen size, from a display capacity notification unit in the television 400. The screen information acquisition unit 17 stores the acquired display capacity information in the playback mode management unit 6.

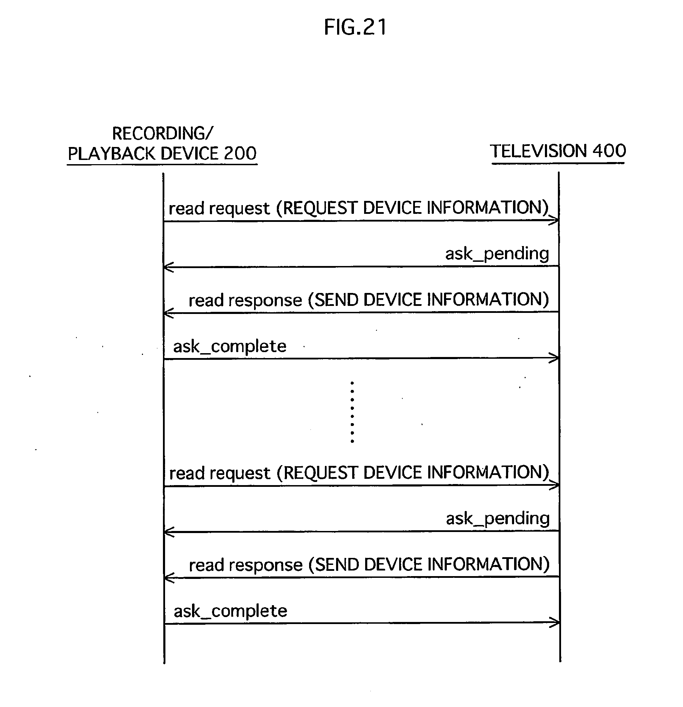

The recording/playback device 200 and the television 400 are connected to each other according to IEEE (Institute of Electrical and Electronics Engineers) 1394. This being so, the acquisition of the display capacity information by the screen information acquisition unit 17 is carried out through transfer of device information according to a device authentication protocol of IEEE 1394 shown in FIG. 21.

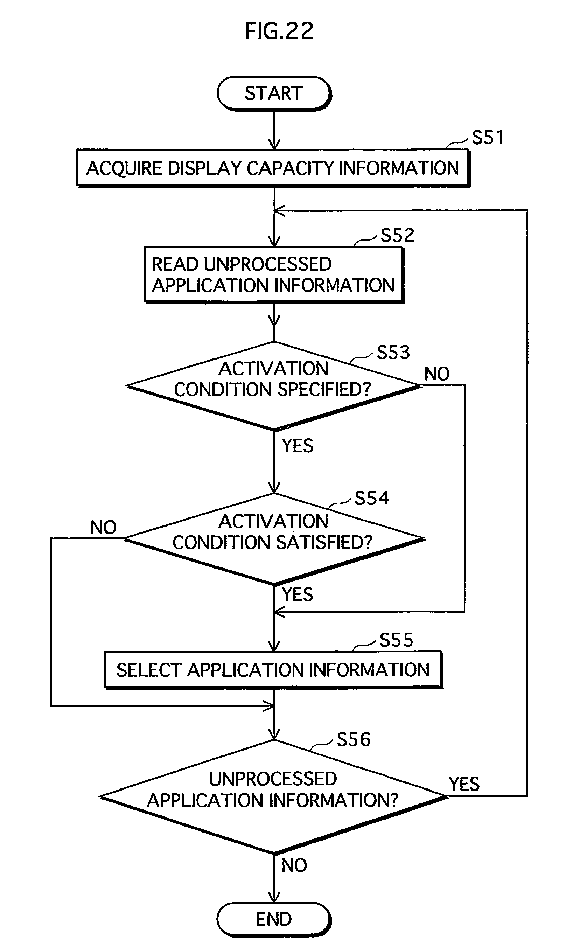

The recording/playback device 200 with the above construction performs the following playback operation. The playback operation in the third embodiment differs from that in the first embodiment, in a filtering operation of generating a selected application information list from an application information list. FIG. 22 is a flowchart of a filtering operation in the third embodiment.

First, the filtering unit 11 reads the display capacity information from the playback mode management unit 6 (S51). The filtering unit 11 then performs a loop of steps S52 to S56 for each set of application information in the application information list.

The filtering unit 11 reads unprocessed application information from the application information list (S52), and judges whether an activation condition is specified in the read application information (S53).

If the activation condition is "0" which indicates an application to be started regardless of the display capacity (S53:NO), the filtering unit 11 registers the application information in the selected application information list (S55).

If the activation condition is "11" which indicates the application to be started if the screen resolution is equal to or greater.than VGA, or "10" which indicates the application to be started if the screen resolution is below VGA (S53 :YES), the filtering unit 11 judges whether the activation condition is satisfied based on the screen resolution of the television 400 shown by the display capacity information read in step S51 (S54) . If the activation condition is satisfied (S54:YES), the filtering unit 11 registers the application information in the selected application information list (S55). The filtering unit 11 judges whether unprocessed application information exists in the application information list (S56) . If so (S56:YES), the filtering unit 11 returns to step S52. This completes the filtering operation.

Specific examples of playback images output from the recording/playback device 200 in the third embodiment are given below.

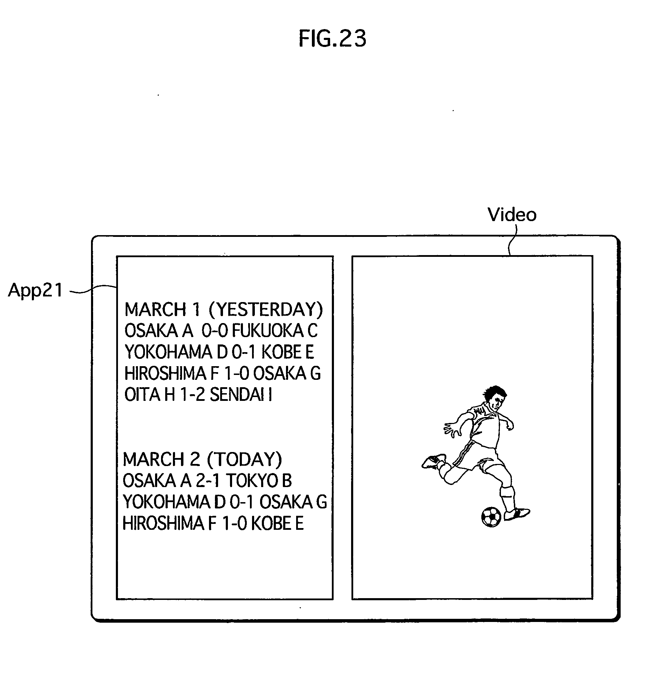

When a broadcast program is played with the recording/playback device 200 being connected with the television 400 whose display capacity is SVGA, only App21 is activated. As a result, a playback image shown in FIG. 23, in which an image generated by App21 is laid out together with the video output from the AV decoding unit 7, is displayed on the television 400.

Here, App21 is an application for displaying a list of results of all soccer matches conducted up to the broadcast day of the broadcast program. App21 enables the user to view a large amount of information altogether on a big screen.

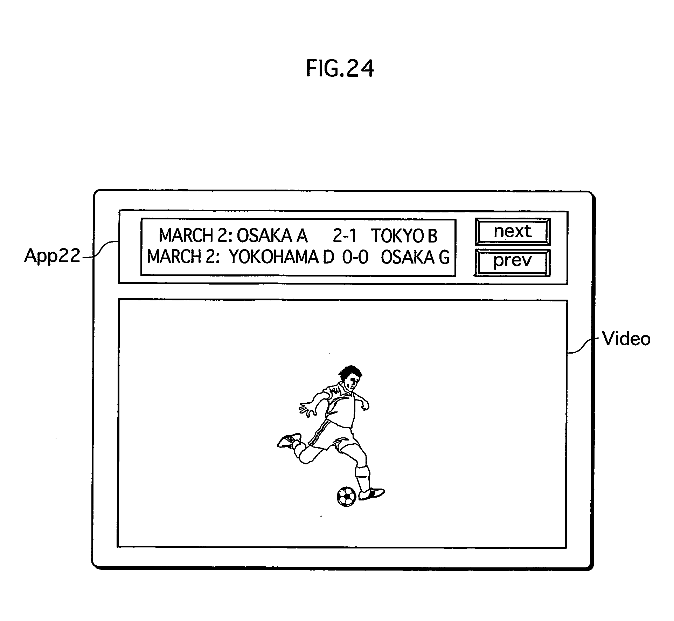

When the broadcast program is played with the recording/playback device 200 being connected with a mobile phone whose display capacity is QVGA, on the other hand, only App22 is executed. As a result, a playback image shown in FIG. 24, in which an image generated by App22 is laid out together with the video output from the AV decoding unit 7, is displayed on the mobile phone.

App22 is an application for displaying results of all soccer matches conducted on the broadcast day and the day before, in units of two soccer matches. When the user presses a "next" button or a "prev" button displayed on a screen, the displayed information is scrolled to show another match result. The amount of information displayed all at once by App2 is small, so that large characters can be used even when the information is laid out in a small area. Also, since the image generated by App2 occupies only a small area, the video can be displayed in a large area to increase viewability on a small screen.

According to this embodiment, an activation condition of an application in a broadcast program is set according to a display capacity of a display device connected with the recording/playback device 200. Hence an application which offers higher user interface operability and viewability can be activated depending on the display capacity of the display device.

For instance, when the broadcast program includes applications which differ in display layout according to aspect ratio or includes a large-screen application for displaying a large amount of information altogether and a small-screen application for displaying a small amount of information with a large font for greater viewability, an application optimal to the display device can be activated.

### (Modifications)

Though the present invention has been described by way of the above embodiments, the present invention is not limited to such. Example modifications are given below.
(1) The present invention also applies to a playback method achieved by a procedure shown by each flowchart described in the above embodiments. This method may be realized by a computer program written in a program description language. Such a computer program may be distributed as a digital signal.
   Also, the present invention may be realized by a computer-readable storage medium, such as a flexible disk, a hard disk, a CD-ROM, an MO, a DVD, a DVD-ROM, a DVD-RAM, a BD (Blu-ray Disc), or a semiconductor memory, on which the above computer program or digital signal is recorded. Conversely, the present invention may also be realized by the computer program or digital signal that is recorded on such a storage medium.
   The computer program or digital signal that achieves the present invention may also be transmitted via a network, such as an electronic communications network, a wired or wireless communications network, or an internet, or via data broadcasting.
   The computer program or digital signal may be provided to an independent computer system by distributing a storage medium on which the computer program or digital signal is recorded, or by transmitting the computer program or digital signal via a network. The independent computer system may then execute the computer program or digital signal to function as the present invention. The present invention can also be realized by a computer system that includes a microprocessor and a memory. In this case, the computer program can be stored in the memory, with the microprocessor operating in accordance with this computer program.
(2) The present invention may be realized by an LSI which controls the recording/playback device described in the above embodiments. Such an LSI can be implemented by integrating the functional blocks including the operation reception unit 1, the recording/playback control unit 2, the TS decoding unit 4, the playback mode management unit 6, the AV decoding unit 7, the section analysis unit 8, the application information list generation unit 10, the filtering unit 11, the application execution unit 12, the application display unit 13, the network device 14, and the clock unit 15 shown in FIG. 3, the index list generation unit 16 shown in FIG. 14, and the screen information acquisition unit 17 shown in FIG. 20. These functional blocks may be individually constructed as an LSI, or partly or wholly constructed as a system LSI.
   Here, a dedicated or general-purpose processor may be used for circuit integration instead of LSI. An FPGA (Field Programmable Gate Array) which is an LSI chip programmable after manufacture and a reconfigurable processor capable of reconfiguring connections and settings of circuit cells within an LSI chip are applicable too. If a new IC technique that can replace the conventional LSI is developed as a result of the advance of semiconductor and other technologies in the future, the functional blocks may be integrated using this technique. For example, biotechnology may be adopted for such a technique.
(3) The above embodiments describe the case where an internal hard disk drive is used for recording a broadcast program, but an external storage device connected with the recording/playback device may equally be used.
(4) The digital broadcast playback device according to the present invention need not have a recording function. For example, a digital television set having an application execution function can be used as the digital broadcast playback device.
(5) Any recording medium may be used for recording a broadcast program. Examples of such a recording medium include: an optical disc such as a DVD-RAM, a DVD-RW, a DVD-R, a DVD+RW, a DVD+R, a CD-R, or a CD-RW; a magneto-optical disk such as a PD or an MO; a semiconductor memory card such as a CompactFlash card, a SmartMedia card, a Memory Stick card, a MultiMediaCard, or a PCMCIA card; a magnetic disk such as a flexible disk, SuperDisk, Zip, or Clik!; and a removable hard disk drive such as ORB, Jaz, SparQ, SyJet, EZFley, or Microdrive.
(6) The limitations described in the above embodiments and the modifications may be freely combined.

### Industrial Applicability

The present invention can be used, for example, for a digital broadcast playback device for playing back digital television broadcast programs.

## Claims

1. A digital broadcast playback device (200) for playing back AV content included in a broadcast program and executing an application included in the broadcast program, the digital broadcast playback device being **characterized by** comprising:
a playback mode judgment unit (6) operable to judge whether the AV content is to be played back in a real-time mode or a time-shift mode;
a playback time specification unit (15) operable to specify a time when the AV content is played back;
an application acquisition unit (8) operable to acquire, from a digital stream that contains the broadcast program, (i) applications included in the broadcast program, (ii) information showing activation conditions of the respective applications; and (iii) expiration times of the respective applications;
a selection unit (11) operable to select, from the applications, an application whose activation condition is the real-time mode and whose expiration time is after the time when the AV content is played back if the AV content is to be played back in the real-time mode, and an application whose activation condition is the time-shift mode and whose expiration time is after the time when the AV content is played back if the AV content is to be played back in the time-shift mode; and
an activation unit (12) operable to activate the selected application, with the playback of the AV content.

2. The digital broadcast playback device of Claim 1,
wherein the expiration time is a time after which a server device no lounger provides a service for the application through communication.

3. The digital broadcast playback device of Claim 1 further comprising a display capacity acquisition unit (17) operable to acquire display capacity information showing a display capacity of a display device used to display an image generated by playing back the AV content,
wherein said application acquisition unit (8) further acquires, from the digital stream, information showing display capacities required for the respective applications, and
said selection unit (11) further selects, from the applications, an application whose required display capacity is within the display capacity of the display device.

4. The digital broadcast playback device of Claim 3,
wherein the display capacity of the display device is at least one of a screen resolution, an aspect ratio, and a screen size of the display device.

5. The digital broadcast playback device of Claim 1 further comprising a playback control unit (2) operable to receive a designation of a playback position of the AV content, and play back the AV content from the designated - playback position,
wherein an application whose activation condition is the time-shift mode has a function of presenting, based on index information showing a correspondence between portions and playback positions of the AV content, information about the portions of the AV content to a user and designating the playback position corresponding to a portion selected by the user to said playback control unit.

6. The digital broadcast playback device of Claim 5,
wherein said application acquisition unit (8) further acquires the index information from the digital stream.

7. The digital broadcast playback device of Claim 1 further comprising
a communication unit (14) operable to receive a designation of a server device, and acquire information from the designated server device via a network,
wherein an application whose activation condition is the time-shift mode has a function of designating the server device to said communication unit and presenting the information acquired from the server device to a user, and
the server device provides the information which relates to the broadcast program and covers a time period from after broadcast of the broadcast program ends to when the AV content is played back.

8. A digital broadcast playback method for use in a playback device (200) for playing back AV content included in a broadcast program and executing an application included in the broadcast program, the digital broadcast playback method being **characterized by** comprising steps of:
judging (S2) whether the AV content is to be played back in a real-time mode or a time-shift mode;
specifying a time when the AV content is played back;
acquiring, from a digital stream that contains the broadcast program, (i) applications included in the broadcast program, (ii) information showing activation conditions of the respective applications, and (iii) expiration times of the respective applications (S8);
selecting, from the applications, an application whose activation condition is the real-time mode and whose expiration time is after the time when the AV content is played back if the AV content is to be played back in the real-time mode, and
an application whose activation condition is the time-shift mode and whose expiration time is after the time when the AV content is played back if the AV content is to be played back in the time-shift mode (S14); and
activating the selected application, with the playback of the AV content (S15).

9. A computer program used in a computer for playing back AV content included in a broadcast program and executing an application included in the broadcast program, the computer program being **characterized by** comprising:
program code operable to cause the computer to judge whether the AV content is to be played back in a real-time mode or a time-shift mode (S2);
program code operable to cause the computer to specify a time when the AV content is played back;
program code operable to cause the computer to acquire, from a digital stream that contains the broadcast program, (i) applications included in the broadcast program (ii) information showing activation conditions of the respective applications, and (iii) expiration times of the respective applications (S8);
program code operable to cause the computer to select; from the applications, an application whose activation condition is the real-time mode and whose expiration time is after the time when the AV content is played back if the AV content is to be played back in the real-time mode, and an application whose activation condition is the time-shift mode and whose expiration time is after the time when the AV content is played back if the AV content is to be played back in the time-shift mode (S14); and
program code operable to cause the computer to activate the selected application, with the playback of the AV content (S15).

10. A computer-readable storage medium storing a computer program used in a computer for playing back AV content included in a broadcast program and executing an application included in the broadcast program, the computer program being **characterized by** comprising:
program code operable to cause the computer to judge whether the AV content is to be played back in a real-time mode or a time-shift mode (S2);
program code operable to cause the computer to specify a time when the AV content is played back;
program code operable to cause the computer to acquire, from a digital stream that contains the broadcast program, (i) applications included in the broadcast program, (ii) information showing activation conditions of the respective applications, and (iii) expiration times of the respective applications (S8);
program code operable to cause the computer to select, from the applications, an application whose activation condition is the real-time mode and whose expiration time is after the time when the AV content is played back if the AV content is to be played back in the real-time mode, and an application whose activation condition is the time-shift mode and whose expiration time is after the time when the AV content is played back if the AV content is to be played back in the time-shift mode (S14); and
program code operable to cause the computer to activate the selected application, with the playback of the AV content (S15).

## Patentansprüche

1. Digitalrundfunk-Wiedergabevorrichtung (200) zum Wiedergeben von AV-Inhalt, der in einem Rundfunkprogramm enthalten ist, und zum Ausführen einer Anwendung, die in dem Rundfunkprogramm enthalten ist, wobei die Digital Rundfunk- Wiedergabevorrichtung **dadurch gekennzeichnet ist, dass** sie umfasst:
eine Wiedergabemodus-Feststelleinheit (6), die in Funktion feststellen kann, ob der AV-Inhalt in einem Echtzeitmodus oder einem Time-Shift-Modus wiedergegeben werden soll;
eine Wiedergabezeit-Spezifikationseinheit (15), die in Funktion eine Zeit spezifizieren kann, zu der AV-Inhalte wiedergegeben wird;
eine Anwendungs-Erfassungseinheit (8), die in Funktion aus einem digitalen Strom, der das Rundfunkprogramm beinhaltet, I. Anwendungen, die in dem Rundfunkprogramm enthalten sind, II. Informationen, die Aktivierungsbedingungen der jeweiligen Anwendungen zeigen, und III Ablaufzeiten der jeweiligen Anwendungen erfassen kann;
eine Auswähleinheit (11), die in Funktion aus den Anwendungen eine Anwendung, deren Aktivierungsbedingung der Echtzeitmodus ist und deren Ablaufzeit nach der Zeit liegt, zu der der AV-Inhalt wiedergegeben wird, wenn der AV-Inhalt in dem Echtzeitmodus wiedergegeben werden soll, und eine Anwendung auswählen kann, deren Aktivierungsbedingung der Time-Shift-Modus ist und deren Ablaufzeit nach der Zeit liegt, zu der der AV-Inhalt wiedergegeben wird, wenn der AV-Inhalt in dem Time-Shift-Modus wiedergegeben werden soll; und
eine Aktivierungseinheit (12), die in Funktion die ausgewählte Anwendung mit der Wiedergabe des AV-Inhaltes aktivieren kann.

2. Digitalrundfunk-Wiedergabevorrichtung nach Anspruch 1,
wobei die Ablaufzeit eine Zeit ist, nach der eine Server-Vorrichtung keinen Dienst für die Anwendung über Kommunikation mehr bereitstellt.

3. Digitalrundfunk-Wiedergabevorrichtung nach Anspruch 1, die des Weiteren eine Anzeigekapazitäts-Erfassungseinheit (17) umfasst, die in Funktion Anzeigekapazitäts-Informationen erfassen kann, die eine Anzeigekapazität einer Anzeigevorrichtung zeigen, die verwendet wird, um ein durch Wiedergeben des AV-Inhaltes erzeugtes Bild anzuzeigen,
wobei die Anwendungs-Erfassungseinheit (8) des Weiteren aus dem digitalen Strom Informationen erfasst, die für die jeweiligen Anwendungen erforderliche Anzeigekapazitäten zeigen, und
die Auswähleinheit (11) des Weiteren aus den Anwendungen aus den Anwendungen eine Anwendung auswählt, deren erforderliche Anzeigekapazität innerhalb der Anzeigekapazität der Anzeigevorrichtung liegt.

4. Digitalrundfunk-Wiedergabevorrichtung nach Anspruch 3,
wobei die Anzeigekapazität der Anzeigevorrichtung wenigstens eine Bildschirmauflösung, ein Seitenverhältnis oder eine Bildschirmgröße der Anzeigevorrichtung ist.

5. Digitalrundfunk-Wiedergabevorrichtung nach Anspruch 1, die des Weiteren eine Wiedergabe-Steuereinheit (2) umfasst, die in Funktion eine Angabe einer Wiedergabeposition des AV-Inhaltes empfangen kann und den AV-Inhalt von der angegebenen Wiedergabeposition aus wiedergeben kann,
wobei eine Funktion einer Anwendung, deren Aktivierungsbedingung der Time-Shift-Modus ist, darin besteht, auf Basis von Indexinformationen, die eine Entsprechung zwischen Abschnitten und Abspielpositionen des AV-Inhaltes zeigen, Informationen über die Abschnitte des AV-Inhaltes einem Benutzer darzustellen und die Wiedergabeposition, die einem durch den Benutzer ausgewählten Abschnitt entspricht, der Wiedergabe-Steuereinheit anzugeben.

6. Digitalrundfunk-Wiedergabevorrichtung nach Anspruch 5,
wobei die Anwendungs-Erfassungseinheit (8) des Weiteren die Indexinformationen aus dem digitalen Strom erfasst.

7. Digitalrundfunk-Wiedergabevorrichtung nach Anspruch 1, die des Weiteren umfasst:
eine Kommunikationseinheit (14), die in Funktion eine Angabe einer Server-Vorrichtung empfangen kann und Informationen von der angegeben Server-Vorrichtung über ein Netzwerk erfassen kann,
wobei eine Funktion einer Anwendung, deren Aktivierungsbedingung der Time-Shift-Modus ist, darin besteht, der Kommunikationseinheit die Server-Vorrichtung anzugeben und die von der Server-Vorrichtung erfassten Informationen einem Benutzer darzustellen, und
die Server-Vorrichtung die Informationen bereitstellt, die sich auf das Rundfunkprogramm beziehen und einen Zeitraum nach Ende der Übertragung des Rundfunkprogramms bis zur Wiedergabe des AV-Inhaltes abdecken.

8. Digitalrundfunk-Wiedergabeverfahren zum Einsatz in einer Wiedergabevorrichtung (200) zum Wiedergeben von AV-Inhalt, der in einem Rundfunkprogramm enthalten ist, und zum Ausführen einer Anwendung, die in dem Rundfunkprogramm enthalten ist, wobei das Digitalrundfunk-Wiedergabeverfahren **dadurch gekennzeichnet ist, dass** es die folgenden Schritte umfasst:
Feststellen (S2), ob der AV-Inhalt in einem Echtzeitmodus oder einem Time-Shift-Modus wiedergegeben werden soll;
Spezifizieren einer Zeit zu der der AV-Inhalt wiedergegeben werden soll;
Erfassen (S8) von I. Anwendungen, die in dem Rundfunkprogramm enthalten sind, 11. Informationen die Aktivierungsbedingungen der jeweiligen Anwendungen zeigen, und III. Ablaufzeiten der jeweiligen Anwendungen aus einem digitalen Strom, der das Rundfunkprogramm beinhaltet;
Auswählen einer Anwendung, deren Aktivierungsbedingung der Echtzeitmodus ist und deren Ablaufzeit nach der Zeit liegt, zu der der AV-Inhalt wiedergegeben wird, wenn der AV-Inhalt in dem Echtzeitmodus wiedergegeben werden soll, und einer Anwendung, deren Aktivierungsbedingung der Time-Shift-Modus ist und deren Ablaufzeit nach der Zeit liegt, zu der der AV-Inhalt wiedergegeben wird, wenn der AV-Inhalt in dem Time-Shift-Modus wiedergegeben werden soll, aus den Anwendungen; und
Aktivieren der ausgewählten Anwendung bei der Wiedergabe des AV-Inhalts (15).

9. Computerprogramm, des in einem Computer zum Wiedergeben von AV-Inhalt, der in einem Rundfunkprogramm enthalten ist, sowie zum Ausführen einer Anwendung eingesetzt wird, die in dem Rundfunkprogramm enthalten ist, wobei das Computerprogramm **dadurch gekennzeichnet ist, dass** es umfasst:
Programmcode, der in Funktion den Computer veranlassen kann, festzustellen, ob der AV-Inhalt in einem Echtzeitmodus oder einem Time-Shift-Modus (S2) wiedergegeben werden soll;
Programmcode, der in Funktion den Computern veranlassen kann, eine Zeit zu spezifizieren, zu der der AV-Inhalt wiedergegeben wird;
Programmcode, der in Funktion den Computer veranlassen kann, aus einem digitalen Strom, der das Rundfunkprogramm beinhaltet, I. Anwendungen, die in dem Rundfunkprogramm enthalten sind, II. Informationen, die Aktivierungsbedingungen der jeweiligen Anwendungen zeigen, und III. Ablaufzeiten der jeweiligen Anwendungen zu erfassen (S8);
Programmcode, der in Funktion den Computer veranlassen kann, aus den Anwendungen eine Anwendung, deren Aktivierungsbedingung der Echtzeitmodus ist und deren Ablaufzeit nach der Zeit liegt, zu der der AV-Inhalte wiedergegeben wird, wenn der AV-Inhalt in dem Echtzeitmodus wiedergegeben werden soll, und eine Anwendung auszuwählen (S14), deren Aktivierungsbedingung der Time-Shift-Modus ist und deren Ablaufzeit nach der Zeit liegt, zu der der AV-Inhalt wiedergegeben wird, wenn der AV-Inhalt in dem Time-Shift-Modus wiedergegeben werden soll, und
Programmcode, der in Funktion den Computer veranlassen kann, die ausgewählte Anwendung mit der Wiedergabe des AV-Inhalts zu aktivieren (S 15).

10. Computerlesbares Speichermedium, das ein Computerprogramm speichert, das in einem Computer zum Wiedergeben von AV-Inhalt, der in einem Rundfunkprogramm enthalten ist, sowie zum Ausführen einer Anwendung eingesetzt wird, die in dem Rundfunkprogramm enthalten ist, wobei das Computerprogramm **dadurch gekennzeichnet ist, dass** es umfasst:
Programmcode, der in Funktion den Computer veranlassen kann, festzustellen, ob der AV-Inhalt in einem Echtzeitmodus oder einem Time-Shift-Modus wiedergegeben werden soll,
Programmcode, der in Funktion den Computer veranlassen kann, eine Zeit zu spezifizieren, zu der der AV-Inhalt wiedergegeben wird;
Programmcode, der in Funktion den Computer veranlassen kann, aus einem digitalen Strom, der das Rundfunkprogramm enthält, I. Anwendungen, die in dem Rundfunkprogramm enthalten sind, II. Informationen, die Aktivierungsbedingungen der jeweiligen Anwendungen zeigen, und III. Ablaufzeiten der jeweiligen Anwendungen zu erfassen (S8);
Programmcode, der in Funktion den Computer veranlassen kann, aus den Anwendungen eine Anwendung, deren Aktivierungsbedingung der Echtzeitmodus ist und deren Ablaufzeit nach der Zeit liegt, zu der der AV-Inhalt wiedergegeben wird, wenn der AV-Inhalt in dem Echtzeitmodus wiedergegeben werden soll, und eine Anwendung auszuwählen (S14), deren Aktivierungsbedingung der Time-Shift-Modus ist und deren Ablaufzeit nach der Zeit liegt zu der der AV-Inhalt wiedergegeben wird, wenn der AV-Inhalt in dem Time-Shift-Modus wiedergegeben werden soll; und
Programmcode, der in Funktion den Computer veranlassen kann, die ausgewählte Anwendung mit der Wiedergabe des AV-Inhalts zu aktivieren (S15).

## Revendications

1. Dispositif de lecture de diffusion numérique (200) destiné à lire un contenu audiovisuel contenu dans un programme de diffusion et à exécuter une application contenue dans le programme de diffusion, le Dispositif de lecture de diffusion numérique étant **caractérisé en ce qu'**il comprend :
une unité de jugement de mode de lecture (6) servant à juger si le contenu audiovisuel doit être lu en mode en temps réel ou en mode décalé dans le temps ;
une unité de spécification de temps de lecture (15) servant à spécifier un moment auquel le contenu audiovisuel et lu ;
une unité d'acquisition d'application (8) servant à acquérir, à partir d'un flux numérique qui contient le programme de diffusion, (i) des applications contenues dans le programme de diffusion, (ii) des informations montrant les conditions d'activation des applications respectives ; et (iii) les temps d'expiration des applications respectives ;
une unité de sélection (11) servant à sélectionner, à partir des applications, une application dont la condition d'activation est le mode en temps réel et dont le temps d'expiration se situe après le moment auquel le contenu audiovisuel est lu si le contenu audiovisuel doit être lu dans le mode en temps réel, et une application dont la condition d'activation est le mode décalé dans le temps et dont le temps d'expiration se situe après le moment auquel le contenu audiovisuel est lu si le contenu audiovisuel doit être lu dans le mode décalé dans le temps ; et
une unité d'activation (12) servant à activer l'application sélectionnée, avec la lecture du contenu audiovisuel.

2. Dispositif de lecture de diffusion numérique selon la revendication 1,
dans lequel le temps d'expiration est un moment après lequel un dispositif serveur ne fournit plus de service pour l'application par l'intermédiaire de la communication.

3. Dispositif de lecture de diffusion numérique selon la revendication 1 comprenant de plus une unité d'acquisition de capacité d'affichage (17) servant à acquérir des informations de capacité d'affichage montrant une capacité d'affichage d'un dispositif d'affichage utilisé pour afficher une image générée par la lecture du contenu audiovisuel,
dans lequel ladite unité d'acquisition d'application (8) acquière de plus, à partir du flux numérique, des informations montrant les capacités d'affichage nécessaires pour les applications respectives, et
ladite unité de sélection (11) sélectionne de plus, à partir des applications, une application dont la capacité d'affichage nécessaire se situe à l'intérieur de la capacité d'affichage du dispositif d'affichage.

4. Dispositif de lecture de diffusion numérique selon la revendication 3,
dans lequel la capacité d'affichage du dispositif d'affichage est au moins l'un parmi une résolution d'écran, un rapport hauteur/largeur et une taille d'écran du dispositif d'affichage.

5. Dispositif de lecture de diffusion numérique selon la revendication 1, comprenant de plus une unité de commande de lecture (2) servant à recevoir une indication d'une position de lecture du contenu audiovisuel, et à lire le contenu audiovisuel à partir de la position de lecture indiquée,
dans lequel une application dont la condition d'activation est le mode décalé dans le temps possède une fonction consistant à présenter, sur la base d'informations de l'index montrant une correspondance entre les parties et les positions de lecture du contenu audiovisuel, des informations concernant les parties du contenu audiovisuel à un utilisateur et à indiquer la position de lecture correspondant à une partie sélectionnée par l'utilisateur à ladite unité de commande de lecture.

6. Dispositif de lecture de diffusion numérique selon la revendication 5,
dans lequel ladite unité d'acquisition d'application (8) acquière de plus les informations de l'index à partir du flux numérique.

7. Dispositif de lecture de diffusion numérique selon la revendication 1, comprenant de plus
une unité de communication (14) servant à recevoir une indication d'un dispositif serveur, et à acquérir des informations à partir du dispositif serveur indiqué via un réseau,
dans lequel une application dont la condition d'activation est le mode décalé dans le temps possède une fonction consistant à indiquer le dispositif serveur à ladite unité de communication et à présenter les informations acquises du dispositif serveur à un utilisateur, et
le dispositif serveur fournit les informations qui se rapportent au programme de diffusion et couvre une période de temps commençant après la diffusion du programme de diffusion et se terminant au moment où le contenu audiovisuel est lu.

8. Procédé de lecture de diffusion numérique pour utilisation dans un dispositif de lecture (200) destiné à lire un contenu audiovisuel contenu dans un programme de diffusion et à exécuter une application contenue dans le programme de diffusion, le procédé de lecture de diffusion numérique étant **caractérisé en ce qu'**il comprend les étapes consistant à :
juger (S2) si le contenu audiovisuel doit être lu dans le mode en temps réel ou dans le mode décalé dans le temps ;
spécifier un moment auquel le contenu audiovisuel est lu ;
acquérir, à partir d'un flux numérique qui contient le programme de diffusion, (i) des applications contenues dans le programme de diffusion, (ii) des informations montrant les conditions d'activation des applications respectives, et (iii) les temps d'expiration des applications respectives (S8) ;
sélectionner, à partir des applications, une application dont la condition d'activation est le mode en temps réel et dont le temps d'expiration se situe après le moment auquel le contenu audiovisuel est lu si le contenu audiovisuel doit être lu dans le mode en temps réel, et une application dont la condition d'activation est le mode décalé dans le temps et dont le temps d'expiration se situe après le moment auquel le contenu audiovisuel est lu si le contenu audiovisuel doit être lu dans le mode décalé dans le temps (S14) ; et
activer l'application sélectionnée, avec la lecture du contenu audiovisuel (S15).

9. Programme informatique utilisé dans un ordinateur destiné à lire un contenu audiovisuel contenu dans un programme de diffusion et à exécuter une application contenue dans le programme de diffusion, le programme informatique étant **caractérisé en ce qu'**il comprend :
un code de programme servant à amener l'ordinateur à juger si le contenu audiovisuel doit être lu dans un mode en temps réel ou dans un mode décalé dans le temps (S2) ;
un code de programme servant à amener l'ordinateur à spécifier un moment auquel le contenu audiovisuel est lu ;
un code de programme servant à amener l'ordinateur à acquérir, à partir d'un flux numérique qui contient le programme de diffusion, (i) des applications contenues dans le programme de diffusion, (ii) des informations montrant les conditions d'activation des applications respectives, et (iii) les temps d'expiration des applications respectives (S8) ;
un code de programme servant à amener l'ordinateur à sélectionner, à partir des applications, une application dont la condition d'activation est le mode en temps réel et dont le temps d'expiration se situe après le moment auquel le contenu audiovisuel est lu si le contenu audiovisuel doit être lu dans le mode en temps réel, et une application dont la condition d'activation est le mode décalé dans le temps et dont le temps d'expiration se situe après le moment auquel le contenu audiovisuel est lu si le contenu audiovisuel doit être lu dans le mode décalé dans le temps (S14) ; et
un code de programme servant à amener l'ordinateur à activer l'application sélectionnée, avec la lecture du contenu audiovisuel (S15).

10. Support de stockage lisible sur ordinateur stockant un programme informatique utilisé dans un ordinateur destiné à lire un contenu audiovisuel contenu dans un programme de diffusion et à exécuter une application contenue dans le programme de diffusion, le programme informatique étant **caractérisé en ce qu'**il comprend :
un code de programme servant à amener l'ordinateur à juger si le contenu audiovisuel doit être lu dans un mode en temps réel ou dans un mode décalé dans le temps (S2) ;
un code de programme servant à amener l'ordinateur à spécifier un moment auquel le contenu audiovisuel est lu ;
un code de programme servant à amener l'ordinateur à acquérir, à partir d'un flux numérique qui contient le programme de diffusion, (i) des applications contenues dans le programme de diffusion, (ii) des informations montrant les conditions d'activation des applications respectives, et (iii) les temps d'expiration des applications respectives (S8) ;
un code de programme servant à amener l'ordinateur à sélectionner, à partir des applications, une application dont la condition d'activation est le mode en temps réel et dont le temps d'expiration se situe après le moment auquel le contenu audiovisuel est lu si le contenu audiovisuel doit être lu dans le mode en temps réel, et une application dont la condition d'activation est le mode décalé dans le temps et dont le temps d'expiration se situe après le moment auquel le contenu audiovisuel est lu si le contenu audiovisuel doit être lu dans le mode décalé dans le temps (S14) ; et
un code de programme servant à amener l'ordinateur à activer l'application sélectionnée, avec la lecture du contenu audiovisuel (S15).
